# EUROPEAN PATENT APPLICATION

(11) **EP 3 604 643 A1**
(43) Date of publication of application: **05.02.2020**
(21) Application number: 18186878.7
(22) Date of filing: 01.08.2018
(51) Int. Cl.: D01H 1/241, F16G 1/00, F16G 5/00

(54) **DRIVE BELT AND TRANSMISSION UNIT FOR TWO SEQUENTLY ARRANGED DRIVE BELTS**

(71) Applicant: Saurer Czech s.r.o., 547 01 Náchod (CZ)
(72) Inventor: Macek, Jonas, 54701 Nachod (CZ); Baudys, Josef, 542 33 Rtyne v Podkrkonosí (CZ)
(74) Representative: Morgenthum-Neurode, Mirko

(57) **Abstract**

The invention relates to a transmission unit (1) for two sequently arranged drive belts (2, 3) in a drive belt unit (12) of a machine for transmitting power to several positions, in particular to output rollers (4) of a spinning machine, as well as to a belt drive unit for transmitting power to several positions, in particular to output rollers of a spinning machine. To propose a belt drive which can be extended to any length, which reduces the transmission of vibrations along the belt and thus reducing the slippage of the long belts on the output rollers as well as which allows a simplified exchange of the drive belt and a more cost-efficient operation of the belt drive, the transmission unit (1) of the belt drive (12) comprises an input belt wheel (5) to be driven by a first drive belt (2) and an output belt wheel (6) for driving a second drive belt (3), wherein a transmission belt (7) indirectly interacting with both belt wheels (5, 6) is arranged in the transmission unit (1) so that both belt wheels (5, 6) turn in the same direction and have a transmission ratio of 1 : 1.

## Description

The invention relates to a belt drive unit for transmitting power to several positions, in particular to output rollers of a spinning machine. Additionally, the invention relates to a transmission unit for two sequently arranged drive belts of a spinning machine for transmitting power to multiple output rollers.

Belts drives are widely used in spinning machines, in particular for transmitting force from a single motor to several output rollers via a single drive belt, i.e., to split the power of the motor to a number of processing stations. The output rotors can for example be directly connected to spinning boxes of open-end rotor spinning machines so that a certain number of spinning boxes arranged in parallel can be driven by a single motor.

Document DE 10 129 111 A1 discloses a tangential drive belt especially for textile machines which has its ends bonded together into a continuous belt. The belt has a multi-layer structure with at least one tensile layer and a friction layer on each side. The ends of the belt are joined together in relation to the belt axis so that one side of the belt transits into the other side. The belt ends are turned by 180° for joining and are held together by a smooth adhesive bonding point.

It may be considered a first object of the present invention to propose a belt drive which can be extended to any length without adverse effects due to a large belt length.

It may be considered another object of the present invention to propose a belt drive or a component thereof which reduces the transmission of vibrations along the belt or between the output rollers and thus minimizing the slippage of the long belt on the output rollers of a spinning machine.

A further objective of the invention may be to propose a belt drive or a component thereof which reduces the wear or decreases the extending of the belt by aging, in particular due to vibrations and uneven running of the drive belt.

It might be finally considered an objective of the present invention to propose a belt drive or a component thereof which allows a simplified exchange of the drive belt and a more cost-efficient operation of the belt drive.

These and further objectives may be achieved by a transmission unit according to claim 1 or a belt drive unit according to claim 8. Dependent claims refer to preferred embodiments of the invention.

The transmission unit according to the invention for two sequently arranged drive belts of a machine for transmitting power to several positions, in particular to output rollers of a spinning machine, comprises an input belt wheel to be driven by a first drive belt as well as an output belt wheel for driving a second drive belt, wherein a transmission belt indirectly interacting with both belt wheels is arranged in the transmission unit so that both belt wheels turn in the same direction and have a transmission ratio of 1 : 1.

The belt drive unit according to the present invention for transmitting power to several positions, in particular to output rollers of a spinning machine, has a first and a second drive belt each for transmitting power to at least one output roller as well as a transmission unit interacting with the first and the second drive belt, wherein the first drive belt drives the second drive belt via the transmission unit.

The inventors have recognized that substituting a single long drive belt with a series of shorter drive belts by using a transmission unit has a number of advantages. First of all, by shortening each of the single drive belts the vibrations of the drive belt due to extending of the belt, in particular due to aging, is significantly reduced at each of the output roller. Therefore, vibrations which might make it difficult to keep the drive belt in the intended position are avoided and the reliability of the drive unit is much higher. Additionally, an exchange of each of the shorter drive belts is easier and in particular if one of the drive belts has a defect or some wear in only a certain section, not the replacement of one single, very long belt is necessary, but instead only of the specific, much shorter drive belt exhibiting the damage has to be renewed. Therefore, the drive unit can be operated much more cost-efficient and additionally with a significantly shorter downtime due to a faster exchange of a shorter belt.

The inventors have further realized that the longer the drive belt, the more difficult to operate and the less elasticity of the belt is allowed for faultless operation and hence there is an absolute length limit for each type of a single belt. With the present invention the length of the drive belt assembly including a transmission unit between each two neighbouring drive belts can be extended to significantly larger length and cheaper drive belts with wider tolerances regarding the stretch can be utilized.

A belt drive unit may be any device or part of a machine which is intended to drive a number of processing stations, machines or subunits of a large machine at different positions via the interaction of a driven belt with a corresponding number of output rollers. The belt drive unit comprises at least a first drive belt driven by a driving unit such as a motor and at least one further drive belt which is not directly driven by a driving unit, but instead by the first drive belt via a transmission unit. The driving unit may power several driving belts and/or there might be several further drive belts driven utilizing a transmission unit by a previous drive belt, in particular a first drive belt interacting with a driving unit. The belt drive unit may comprise multiple transmission units as the general concept of the present invention can be easily extended to any number transmission units with one more drive belt than transmission units.

Each of the drive belts may be made out of any material and may have any belt-shape or surface structure. Preferably, each of the drive belts is arranged as a closed loop, which is particularly preferred untwisted. It is further preferred that each drive belt is built in one piece. The drive belt may have a flat, serrated, notched or toothed surface. Particularly preferred, the surface structure of the drive belt is adapted to the surface of the wheels interacting with the drive belt. Although the drive belt may have any cross-section shape, a rectangle shape is favoured, especially with a ratio of both sides of at least 1 : 5 with the longer side interacting with the output rollers. At least both drive belts and preferably all drive belts and/or the transmission belt may have an identical cross section area, however it is preferred that at least the drive belts and the transmission belt and possibly even all belts have a different cross section area and/or are a different type of belt.

The output rollers are preferably all identical and/or arranged at the same distance to one another. Each output roller may be an open or opening roller, a rotor or any other device for transmitting the linear motion of the drive belt into a rotational motion. It is particularly preferred that each of the output rollers is directly connected to or part of a spinning box of an open-end rotor spinning machine. In particular, all spinning boxes may be arranged side by side in one line along one of the driving belts, preferably along each of the driving belts and especially preferred along all of the driving belts of one belt drive unit.

A transmission unit according to the invention is a device arranged between two subsequent drive belts and transmitting the movement of one drive belt to another drive belt, driving the second drive belt in the same direction and with the same velocity. Accordingly, the transmission unit has a transmission ratio of 1 : 1 between the input and the output drive wheel, wherein further different transmission ratios might be realized between parts within the transmission unit. Preferably, there are no interacting gears or toothed wheels arranged in the transmission unit. In a particularly advantageous embodiment, the transmission unit only comprises axles, wheels and belts, in particular two axles, four wheels and one belt.

The input and output belt wheel may be arranged in any position of the transmission unit and may have any shape and size. It is preferred that both belt wheels are arranged on opposing sides of the transmission unit and/or have a surface which is corresponding to the surface structure of the side of the drive belt interacting with the belt wheel. Each of the input and/or output drive wheels has preferably a cylindrical shape with a height at least two times, in particular between two and four times larger than the height of the corresponding drive belt.

The transmission belt may have a different or the same height, thickness, surface shape and/or cross-section area than at least one of the drive belts and/or might be made out of the same material. Although the transmission belt may have any further functions, it is advantageous if the transmission belt is only interacting with both belt wheels. Additionally, the transmission belt may also interact with one or several tension rollers keeping the transmission belt at a predefined tension. The interaction of the transmission belt with both belt wheels is indirect, i.e., over at least one further component of the transmission unit such as an axle and/or a further wheel.

In a preferred embodiment of the transmission unit, the input belt wheel as well as a first transmission belt wheel are each directly connected to a first transmission axle and the output belt wheel as well as a second transmission belt wheel are each directly connected to a second transmission axle, wherein the transmission belt is interacting with both transmission belt wheels, in particular directly transmitting the rotation of one transmission belt wheel to the other. Arranging both the belt wheel and the transmission wheel to a common axle leads advantageously to a very direct transmission of power as well as to a simple and robust construction of the transmission unit. It is particularly preferred that the transmission unit comprises no further axles or wheels. A direct connection between a wheel and the axle means at least that the wheel and the axle cannot be moved relative to each other and preferably that the wheel is directly attached to the axle without further parts between axle and wheel. The transmission axles may be mounted to the transmission unit in any possible way, however it is favoured that both transmission axles are rotatable mounted to a frame or housing of the transmission unit, in particular the same frame or part of the housing and/or via a ball- or slide bearing.

According to a further advancement of the transmission unit, each of the transmission ratios between parts of the transmission unit, in particular between the input belt wheel and the first transmission belt wheel, between the first and the second transmission belt wheel as well as between the second transmission belt wheel and the output belt wheel is 1 : 1, advantageously leading to a movement of all parts of the transmission unit with the same speed, in particular an identical angular velocity of all wheels and an identical linear speed of all belts, however with different directions of the linear velocities of the transmission belt and both drive belts which are moving in the same direction.

Although all belt wheels of the transmission unit may be identical, in particular in regard to their diameter, shape, height and/or material, in an enhanced version of the transmission unit the input and output belt wheels are identical to one another, but are different from both transmission belt wheels, which are also identical to one another, so that the linear speed of the drive belts and the transmission belts are different, allowing to adjust the speed to the characteristics of the transmission belt, in particular if the transmission belt is different from the drive belts, which are preferably identical to one another.

In a preferred embodiment of the transmission unit, both transmission axles are arranged parallel to one another and the input belt wheel as well as the output belt wheel are positioned opposing each other on the respective axle. A parallel arrangement of both axles allows an easy construction of the transmission unit where all belts are also arranged in parallel. Additionally, arranging both the input and the output belt wheel opposing each other and/or on opposing sides of the transmission unit allows the direct prolongation of the first drive belt by the second drive belt leading to a configuration identical to a belt drive unit with a single long belt without the disadvantages of very long belts. It is therefore particularly preferred that the input and the output belt wheel are also arranged at the same height.

The transmission unit may have any dimensions, in particular any width in a direction between the input and the output belt wheel, however it is preferred that the width is as small as possible to be able to connect two drive belts in series without a too large gap between the last output roller on the first drive belt and the first output roller on the second drive belt. Such an embodiment advantageously saves space and allows the arrangement of as many output rollers, in particular output rollers of neighbouring spinning boxes, as possible. Therefore, preferably the distance between both transmission axles is smaller than five times the diameter of the input and/or output belt wheel, more preferably smaller than three times the diameter and most preferably smaller than three times the radius of the input and/or output belt wheel, leaving a gap between both the input and output roller of preferably less than four times the diameter, more preferably less than two times the diameter and most preferably less than the radius of the input and/or output belt wheel.

According to a preferred embodiment of the belt drive unit, the first drive belt is driven by a drive unit and the second drive belt is driven at the same speed, in particular the same linear velocity, by the first drive belt by means of the transmission unit, effectively and advantageously extending the first drive belt by the second drive belt. The drive unit can generally be any means to accelerate and to power the first drive belt, for example a fluid motor, a hydraulic or pneumatic motor or preferably an electric motor. If the belt drive unit comprises more than two drive belts and accordingly more than one transmission unit, it is preferred that only one of the drive belts, in particular the very first drive belt, which is only connected to one transmission unit, is driven by the drive unit.

Although it would be possible to arrange further devices or functional units, such as a transmission, between the drive unit and the first drive belt, in a further advancement of the belt drive unit the first drive belt is directly driven by an electric motor, which allows a cost-efficient construction of the drive unit as well as an easy and direct operation via a motor controller of the electric motor. In particular, the first drive belt is preferably arranged on a drive unit wheel which is mounted on an output shaft of the motor or on a gear unit connected to the motor.

Each drive belt can in general be connected to any number of output rollers, preferably the first and the second drive belt are each directly connected to at least three, more preferably at least five output rollers and most preferably each drive belt of the belt drive unit is connected to at least five output rollers. However, it is also possible, that one drive belt in a belt drive unit comprising a large number of drive belts, at least three drive belts, is bridging a gap between output rollers without interacting with any output roller. This might be in particular advantageous when driving several spinning machines, each with several spinning boxes, with one single belt drive unit.

In a further advanced development of the belt drive unit, at least the first and the second drive belt, preferably all drive belts, are each guided by precisely two belt wheels, in particular all drive belts between two further drive belts are connected to an output belt wheel of one transmission unit at one end and to an input belt wheel of another transmission unit at the other end. Terminal drive belts are preferably only connected at one end with a drive wheel of a transmission unit and with either a drive unit wheel or a pulley wheel at the other end. Further, there may be a contact of one or more tension rollers to the drive belt, but preferably from the opposite side of the drive belt than the belt wheels. The drive unit wheel and/or the pulley wheel may have a different size or diameter from one another or from the belt wheels of the transmission unit. In particular the diameter of the drive unit wheel might be chosen considering the ideal number of revolutions of the drive unit as well as the desired linear velocity of the drive belt.

According to a preferred embodiment of the belt drive unit, all drive belts are arranged in series along one line functionally forming a single long belt interrupted by the transmission unit with the advantages of a more stable, vibration-reduced operation and a better exchangeability of the single drive belts compared to a single long belt. Functionally forming a single belt means that all drive belts move along the same direction and/or along one line with the same velocity and preferably are also identical to one another.

These and other aspects of the invention will be apparent from and elucidated with reference to the embodiments described hereinafter.
- Fig. 1: shows a perspective view of a belt drive unit with one transmission unit according to a first embodiment; and
- Fig. 2: shows a perspective view of a belt drive unit with two transmission units according to a second embodiment.

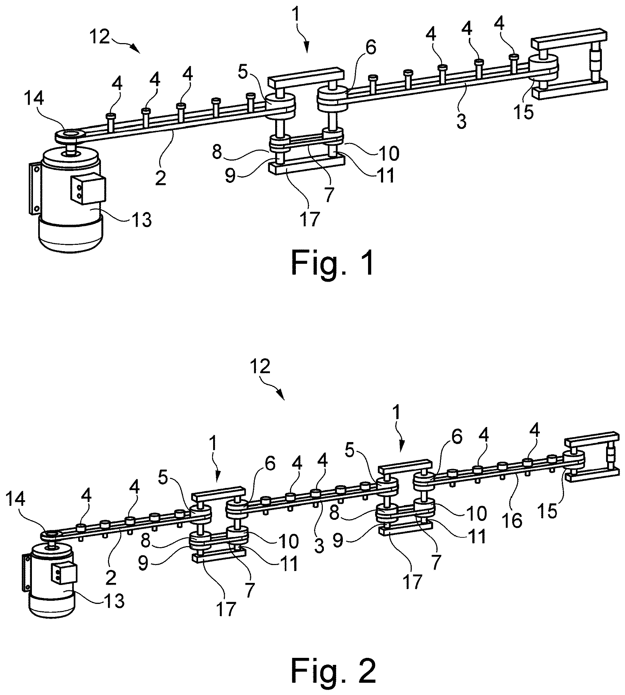

A belt drive unit 12 shown in figure 1 comprises an electric motor as a drive unit 13 with a roller mounted to an output shaft of the electric motor as a drive unit wheel 14. The drive unit wheel 14 is provided to transmit the rotation of the drive unit 13 to a first drive belt 2 at one end of the first drive belt 2.

The other end of the first drive belt 2 is looped around and interacting with an input belt wheel 5 of a transmission unit 1. The transmission unit 1 is built to transmit the power of a drive belt 2 interacting with the input belt wheel 5 to a second drive belt 3 via an output belt wheel 6 of the transmission unit 1 with a transmission ratio of 1 : 1. Accordingly, both drive belts 2, 3 move with the same linear velocity and additionally, both drive belts 2, 3 move in the same direction, hence functionally forming one long drive belt interrupted by the transmission unit 1.

The second drive belt 3, which is driven by the output belt wheel 6 of the transmission unit 1 at one end, is looped around a pulley wheel 15 at the other end, which is not actively driven and is the endpoint of the belt drive unit 12 at the opposite end of the drive unit 13.

In the transmission unit 1, the input belt wheel 5 is fixed to a first transmission axle 9 and the output belt wheel 6 is fixed to a second transmission belt axle 11. Both transmission axles 9, 11 are each rotatably mounted on both ends to a frame 17 of the transmission unit 1 and further are aligned in parallel. The input and output belt wheel 5, 6 are fixed to the corresponding transmission axle 9, 11 at the same height, thus opposing each other.

To each of the transmission axles 9, 11 a transmission belt wheel 8, 10 is fixed and thus rotating at the same angular velocity as the corresponding input or output belt wheel 5, 6. Between the first and the second transmission belt wheel 8, 10 a transmission belt 7 is arranged, transmitting the rotation from one to the other transmission belt wheel 8, 10.

Both the input and output belt wheel 5, 6 are identical to one another and are rotating at the same angular velocity due to the transmission ration of 1 : 1. Both transmission belt wheels 8, 10 are also identical to one another, but smaller than the input and output belt wheel 5, 6, hence rotating at a higher angular velocity.

Each of the drive belts 2, 3 is driving a series of output rollers 4 arranged equidistantly along the drive belts 2, 3. The output rollers 4 are each connected to a spinbox of an open-end rotor spinning machine not shown in the figures.

The second embodiment of a belt drive unit 12 shown in figure 2 is only in a few aspects different from the first embodiment of fig. 1. First of all, there are three subsequent drive belts 2, 3, 16 connected by two transmission units 1, wherein the second drive belt 3 is connected to a transmission unit 1 at both ends, whereas the other two drive belts 2, 16 are only connected at one end to a transmission unit 1.

Additionally, in the transmission units 1 of the second embodiment the transmission belt wheels 8, 10 are identical to the input and output belt wheels 5, 6. Finally, the output rollers 4 interacting with the drive belts 2, 3, 16 have a significantly larger diameter in a section of the surface rolling on the surface of the drive belts 2, 3, 16.

In the claims, any reference signs shall not be construed as limiting the claims. The word "comprising" does not exclude the presence of elements or steps other than those listed in the claims. The indefinite article "a" or "an" preceding an element does not exclude the presence of a plurality of such elements. The mere fact that certain measures are recited in mutually different dependent claims does not indicate that a combination of these measures cannot be used to advantage.

### List of reference signs

- 1: transmission unit
- 2: first drive belt
- 3: second drive belt
- 4: output roller
- 5: input belt wheel
- 6: output belt wheel
- 7: transmission belt
- 8: first transmission belt wheel
- 9: first transmission axle
- 10: second transmission belt wheel
- 11: second transmission axle
- 12: belt drive unit
- 13: drive unit
- 14: drive unit wheel
- 15: pulley wheel
- 16: further drive belt
- 17: frame

## Claims

1. Transmission unit (1) for two sequently arranged drive belts (2, 3) of a machine for transmitting power to several positions, in particular to output rollers (4) of a spinning machine, with
- an input belt wheel (5) to be driven by a first drive belt (2),
- an output belt wheel (6) for driving a second drive belt (3),
- wherein a transmission belt (7) indirectly interacting with both belt wheels (5, 6) is arranged in the transmission unit (1) so that both belt wheels (5, 6) turn in the same direction and have a transmission ratio of 1 : 1.

2. Transmission unit according to claim 1, wherein
- the input belt wheel (5) is directly connected to a first transmission belt wheel (8) by a first transmission axle (9) and
- the output belt wheel (6) is directly connected to a second transmission belt wheel (10) by a second transmission axle (11),
- wherein the transmission belt (7) is interacting with both transmission belt wheels (8, 10).

3. Transmission unit according to claim 2, wherein each of the transmission ratios between the input belt wheel (5) and the first transmission belt wheel (8), between the first and the second transmission belt wheel (8, 10) as well as between the second transmission belt wheel (10) and the output belt wheel (6) is 1 : 1.

4. Transmission unit according to claims 2 or 3, wherein both identical belt wheels (5, 6) are different from both identical transmission belt wheels (8, 10).

5. Transmission unit according to one of the claims 2-4, wherein both transmission axles (9, 11) are arranged parallel to one another and the input belt wheel (5) as well as the output belt wheel (6) are positioned opposing each other on the respective axle (9, 11).

6. Transmission unit according to one of the claims 2 - 5, wherein the transmission belt (7) is only in contact with the first and second transmission belt wheel (8, 10).

7. Transmission unit according to one of the claims 2 - 6, wherein the distance between both transmission axles (9, 11) is smaller than five times the diameter of the input and/or output belt wheel (5, 6).

8. Belt drive unit (12) for transmitting power to several positions, in particular to output rollers (4) of a spinning machine, with
- a first and a second drive belt (2, 3) each for transmitting power to at least one output roller (4) and
- a transmission unit (1) according to one of the above claims interacting with the first and the second drive belt (2, 3),
- wherein the first drive belt (2) drives the second drive belt (3) via the transmission unit (1).

9. Belt drive unit according to claim 8, wherein the first drive belt (2) is driven by a drive unit (13) and the second drive belt (3) is driven at the same speed by the first drive belt (2) by means of the transmission unit (1).

10. Belt drive unit according to claim 8 or 9, wherein the first drive belt (2) is directly driven by an electric motor.

11. Belt drive unit according to one of the claims 8 - 10, wherein the first and the second drive belt (2, 3) are each directly connected to at least three output rollers (4).

12. Belt drive unit according to one of the claims 8 - 11, wherein the first and second drive belts (2, 3) are each guided by precisely two belts wheels (14, 5, 6, 15).

13. Belt drive unit according to one of the claims 8 - 12, wherein all drive belts (2, 3) are arranged in series along one line functionally forming a single long belt interrupted by the transmission unit (1).

14. Belt drive unit according to one of the claims 8 - 13, wherein at least the drive belts (2, 3) and the transmission belt (7) have a different cross section area and/or are a different type of belt.
